# EUROPÄISCHE PATENTANMELDUNG

(11) **EP 1 043 866 A2**
(43) Veröffentlichungstag der Anmeldung: **11.10.2000**
(21) Anmeldenummer: 00107489.7
(22) Anmeldetag: 06.04.2000
(51) Int. Cl.: H04L 12/28, H04B 3/54

(54) **Anordnung für eine Datenübermittlung im Heimbereich**

(30) Priorität: 08.04.1999 DE 19915859
(71) Anmelder: SIEMENS AKTIENGESELLSCHAFT, 80333 München (DE)
(72) Erfinder: Brune, Georg, Dr., 58675 Hemer (DE)

(57) **Zusammenfassung**

Mit einer Kommunikationsanlage (PBX), die über eine Netz-Anschlußeinheit (N-AE) mit einem Kommunikationsnetz (KN) verbunden ist. Des weiteren ist die Kommunikationsanlage (PBX) und mindestens ein Kommunikationsendgerät (KE-I1, KE-I2) mit einem, in einem Heimbereich angeordneten Niederspannungs-Stromnetz (NSL-IN) verbunden. Die Kommunikationsanlage (PBX) und das Kommunikationsendgerät (KE-I1, KE-I2) weisen jeweils eine Anschlußeinheit (PLC-AE) zum Einschreiben von über das Niederspannungs-Stromnetz (NSL-IN) zu übermittelnden Daten in das Niederspannungs-Stromnetz (NSL-IN) und zum Auslesen von über das Niederspannungs-Stromnetz (NSL-IN) übermittelten Daten aus dem Niederspannungs-Stromnetz (NSL-IN) auf.

## Beschreibung

Die vorliegende Erfindung betrifft eine Anordnung zur Datenübermittlung gemäß dem Oberbegriff des Patentanspruchs 1.

Aus der Produktschrift der Firma Siemens AG: 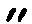 Sonderausgabe telcom report und Siemens Magazin Com: ISDN im Büro - HICOM", Berlin und München, 1985, ISBN 3-8009-3846-4, insbesondere der Seiten 58 bis 75, ist ein Kommunikationssystem für den privaten Bereich bekannt. Ein Anschluß von Kommunikationsendgeräten, z.B. von analogen und digitalen Telefonen an eine Kommunikationsanlage des Kommunikationssystems erfolgt hierbei über, ausschließlich dem Anschluß der Kommunikationsendgeräte dienende sogenannte Zweidrahtleitungen. Die Verlegung derartiger Zweidrahtleitungen - in der Literatur häufig als Leitungsnetz bezeichnet - ist jedoch mit einem erheblichen Aufwand verbunden.

Eine Möglichkeit den erheblichen Aufwand für die Verlegung eines neuen Leitungsnetzes bzw. für Änderungen an einem bereits bestehenden Leitungsnetz zu reduzieren ist ein Anschluß von Kommunikationsendgeräten an die Kommunikationsanlage über eine Funkschnittstelle. Eine bekannte Anschlußtechnik, insbesondere für den Heimbereich ist die RLL/WLL-Anschlußtechnik (RLL/WLL: Radio in the Local Loop / Wireless in the Local Loop), die eine Einbindung einer Funkschnittstelle, z.B. in ein System nach dem DECT-Standard (Digital Enhanced Cordless Telecommunication) vorsieht. Ein derartiges System ist z.B. aus der Produktschrift der Firma Siemens AG: 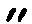 DECTlink Radio Access: Where Performance Counts", Dezember 1995, Order Nr. A5001-N7-P1-1-7600 bekannt.

Hierbei kommt es jedoch insbesondere bei einer Datenübertragung über längere Übertragungsstrecken oder bei einer Datenübertragung über mehrere Etagen eines Gebäudes zu Problemen bei der Datenübertragungsqualität.

Der vorliegenden Erfindung liegt die Aufgabe zugrunde, eine Anordnung anzugeben, durch welche auf einfache Weise eine Datenübertragung im Heimbereich ermöglicht wird.

Gelöst wird die Aufgabe ausgehend von den Merkmalen des Oberbegriffs des Patentanspruchs 1 durch dessen kennzeichnenden Merkmale.

Zum besseren Verständnis einer Datenübermittlung auf Grundlage der sogenannten 'Powerline Communication' - in der Literatur häufig mit PLC abgekürzt - erscheint es erforderlich zunächst noch einmal auf bereits bekannte Prinzipien näher einzugehen.

Die sogenannte 'Powerline Communication' ist eine Übertragungstechnik für das Niederspannungs-Stromnetz, d.h. beispielsweise in Europa für das 230-Volt-Stromnetz und in den USA für das 110-Volt-Stromnetz. Für eine Datenübertragung im Niederspannungs-Stromnetz sind dabei in Europa vier unterschiedliche Frequenzbereiche - häufig auch als CENELEC-Bänder A bis D bezeichnet - festgelegt, die allein für eine Datenübermittlung auf Grundlage der 'Powerline Communication' reserviert sind.

Ein Anschluß von Endgeräten, z.B. von Fernsprechendgeräten oder von sogenannten intelligenten Haushaltsgeräten an das Niederspannungs-Stromnetz erfolgt dabei mittels sogenannter PLC-Modems über eine herkömmliche Steckdose des Niederspannungs-Stromnetzes. Über ein PLC-Modem in das Niederspannungs-Stromnetz eingespeiste, zu übermittelnde Daten werden über das Niederspannungs-Stromnetz zur nächstgelegenen - das Niederspannungs-Stromnetz auf ein Hochspannungs-Stromnetz umsetzenden - Transformatorstation übertragen, in der die zu übertragenden Daten durch eine sogenannte 'Powerline Communication Unit' aus dem Niederspannungs-Stromnetz extrahiert werden und über ein herkömmliches Datenübertragungsnetz - beispielsweise ein ISDN-Kommunikationsnetz oder ein Funk-Kommunikationsnetz - zu einem adressierten Empfänger weiterübermittelt werden. Mit dem beschriebenen Verfahren können beispielsweise auf einfache Weise in jedem Gebäude angeordnete Stromzähler von einer zentralen Stelle aus ausgelesen werden, oder Daten von einer Datenverarbeitungseinrichtung an einen Drucker übermittelt werden.

Ein wesentlicher Vorteil der erfindungsgemäßen Anordnung besteht nun darin, daß bei einer Verbindung einer Kommunikationsanlage mit, der Kommunikationsanlage zugeordneten, internen Kommunikationsendgeräten über ein Niederspannungs-Stromnetz keine neuen Verbindungsleitungen zwischen der Kommunikationsanlage und den internen Kommunikationsendgeräten verlegt werden müssen, sondern daß für eine Datenübermittlung auf ein bereits im Heimbereich bestehendes, weit verzweigtes Netz zurückgegriffen werden kann.

Ein weiterer Vorteil der erfindungsgemäßen Anordnung besteht darin, daß durch den Anschluß der internen Kommunikationsendgeräte an die Kommunikationsanlage über das Niederspannungs-Stromnetz die, im allgemeinen übliche Stromversorgung der internen Kommunikationsendgeräte durch die Kommunikationsanlage entfallen kann und somit der Energiebedarf der Kommunikationsanlage gesenkt werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Zuordnung einer eindeutigen Identifizierung zusätzlich zu einer herkömmlichen Rufnummer zu einem internen Kommunikationsendgerät, ein Anschluß der internen Kommunikationsendgeräte an das Niederspannungs-Stromnetz über eine beliebige Steck-Anschlußvorrichtung des Niederspannungs-Stromnetzes möglich ist, da eine Adressierung der internen Kommunikationsendgeräte nicht wie üblich, durch die einem bestimmten Teilnehmer-Anschlußport der Kommunikationsanlage zugeordnete Rufnummer erfolgt.

Ein Ausführungsbeispiel der Erfindung wird im folgenden anhand der Zeichnung näher erläutert.

Dabei zeigen:
- Fig. 1:: ein Strukturbild zur schematischen Darstellung eines PLC-(PowerLine Communication)-Kommunikationssystems;
- Fig. 2:: ein Ablaufdiagramm zur Veranschaulichung der bei einem Verbindungsaufbau zwischen einem internen und einem externen Kommunikationsendgerät ablaufenden wesentlichen Verfahrensschritten.

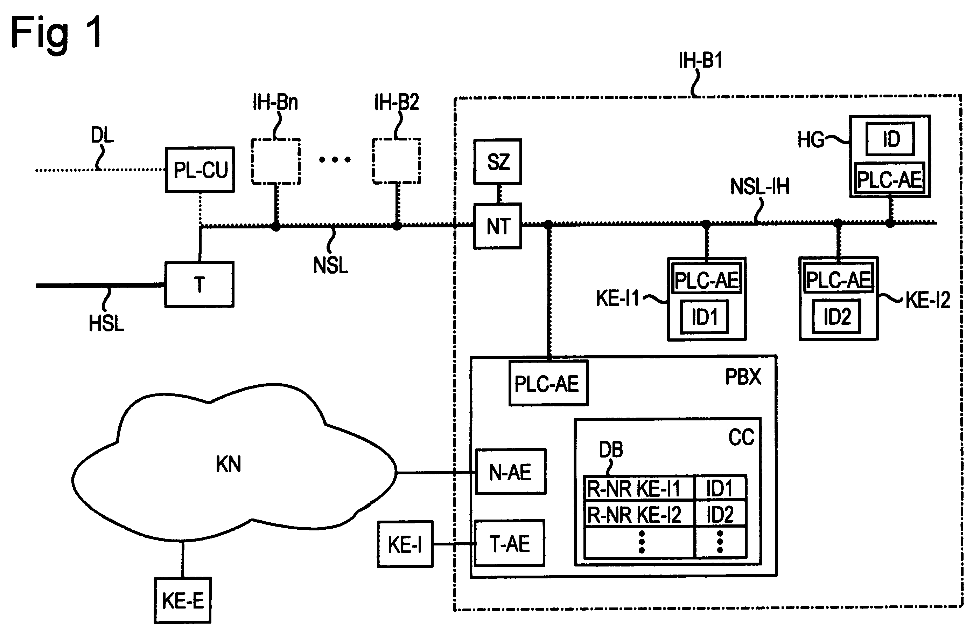

Fig. 1 zeigt eine schematische Darstellung eines sogenannten PLC-Kommunikationssystems, das in mehrere Heimbereiche IH-B1, ...,IH-Bn - in der Literatur häufig als 'inhouse areas' bezeichnet - untergliedert ist. Hierbei kann das PLC-Kommunikationssystem maximal bis zu 250 Heimbereiche IH-B1,...,IH-Bn aufweisen. Die Heimbereiche IH-B1,...,IH-Bn sind über ein sogenanntes Niederspannungs-Stromnetz NSL miteinander verbunden. Beispiele für ein Niederspannungs-Stromnetz NSL sind das 230-Volt-Stromnetz in Europa oder das 110-Volt-Stromnetz in den USA. Hierbei sind die Niederspannungs-Stromnetze der einzelnen Heimbereiche IH-B1,...,IH-Bn jeweils durch eine Netzabschlußeinheit NT - in der Literatur häufig mit 'Network Termination' bezeichnet - vom Niederspannungs-Stromnetz NSL getrennt, so daß die Heimbereiche IH-B1,...,IH-Bn jeweils ein eigenes, abgeschlossenes Niederspannungs-Stromnetz NSL-IH aufweisen. Derartige Netzabschlußeinheiten NT sind dabei häufig in, für jeden Heimbereich vorgesehene Stromzähler SZ integriert.

Das Niederspannungs-Stromnetz NSL ist über einen Transformator T mit einem Hochspannungs-Stromnetz HSL verbunden, wobei durch den Transformator T eine Umsetzung zwischen dem Hochspannungs-Stromnetz HSL und dem Niederspannungs-Stromnetz NSL erfolgt. Das Hochspannungs-Stromnetz HSL dient einer Stromübertragung über längere Übertragungsstrecken und weist beispielsweise Spannungen zwischen 6,6 und 20 kV auf. Über eine mit dem Transformator T gekoppelte, sogenannte PLC-Zugangseinheit PL-CU - in der Literatur häufig als 'Power Line Communication Unit' bezeichnet - ist eine Datenleitung DL - beispielsweise eine Zweidrahtleitung zur Übermittlung von sprachorientierten Daten - an das Niederspannungs-Stromnetz NSL angeschlossen. Die PLC-Zugangseinheit PL-CU kann alternativ auch in den Transformator T integriert werden. Über die PLC-Zugangseinheit werden über die Datenleitung DL empfangene und umgekehrt über das Niederspannungs-Stromnetz NSL weiter zu übermittelnde Daten in das Niederspannungs-Stromnetz NSL eingespeist und über das Niederspannungs-Stromnetz NSL empfangene und über die Datenleitung DL weiter zu übermittelnde Daten aus dem Niederspannungs-Stromnetz NSL gelesen.

Im vorliegenden Ausführungsbeispiel ist ein erster Heimbereich IH-B1 über eine Kommunikationsanlage PBX direkt mit einem Kommunikationsnetz KN verbunden. Beispielhaft ist an das Kommunikationsnetz KN ein externes Kommunikationsendgerät KE-E angeschlossen. Ein Anschluß der Kommunikationsanlage PBX an das Kommunikationsnetz KN erfolgt über eine, in der Kommunikationsanlage PBX angeordnete Netz-Anschlußeinheit N-AE. Ist das Kommunikationsnetz KN beispielsweise ein ISDN-orientiertes Kommunikationsnetz (Integrated Services Digital Network) erfolgt ein Anschluß an das Kommunikationsnetz KN im allgemeinen über einen sogenannten ISDN-Basisanschluß - in der Literatur auch als 'PCM-Highway' oder Primärmultiplexanschluß bezeichnet - welcher im allgemeinen 30 Nutzdatenkanäle, die als ISDN-orientierte B-Kanäle mit einer Übertragungsbitrate von jeweils 64 kBit/s ausgestaltet sind und einen Signalisierungskanal, der als ISDN-orientierter D-Kanal mit einer Übertragungsbitrate von 64 kBit/s ausgestaltet ist, umfaßt.

Zusätzlich weist die Kommunikationsanlage PBX mindestens eine Teilnehmer-Anschlußeinheit T-AE auf, über die üblicherweise mittels S₀-Schnittstellen ISDN-Kommunikationsendgeräte oder mittels daraus abgeleiteten Schnittstellen, wie beispielsweise Uₚ₀-Schnittstellen digitale Kommunikationsendgeräte an die Kommunikationsanlage PBX angeschlossen sind. Allgemein umfassen eine U_{P0}- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist. Alternativ können über sogenannte a/b-Schnittstellen auch analoge Kommunikationsendgeräte - beispielsweise Facsimile-Endgeräte - an die Kommunikationsanlage PBX angeschlossen werden. In der Figur ist beispielhaft ein internes Kommunikationsendgeräte KE-I dargestellt.

Des weiteren ist die Kommunikationsanlage PBX über eine PLC-Anschlußeinheit PLC-AE - in der Literatur häufig als PLC-Modem bezeichnet - mit dem Niederspannungs-Stromnetz NSL-IH des ersten Heimbereichs IH-B1 verbunden. Über die PLC-Anschlußeinheit PLC-AE können über die Netz-Anschlußeinheit N-AE oder die Teilnehmer-Anschlußeinheit T-AE empfangene und über das Niederspannungs-Stromnetz NSL-IH des ersten Heimbereiches IH-B1 weiter zu übermittelnde Daten in das Niederspannungs-Stromnetz NSL-IH des ersten Heimbereiches IH-B1 eingespeist und über das Niederspannungs-Stromnetz NSL-IH des ersten Heimbereiches IH-B1 empfangene und an die Netz-Anschlußeinheit N-AE oder die Teilnehmer-Anschlußeinheit T-AE weiter zu übermittelnde Daten vom Niederspannungs-Stromnetz NSL-IH des ersten Heimbereiches IH-B1 gelesen und weiter übermittelt werden.

An das Niederspannungs-Stromnetz NSL-IH des ersten Heimbereiches IH-B1 sind zusätzlich zur Kommunikationsanlage PBX interne Kommunikationsendgeräte KE-I1, KE-I2 - beispielsweise herkömmliche Fernsprechendgeräte oder Personal Computer - angeschlossen. Des weiteren sind intelligente, steuerbare Haushaltsgeräte HG - wie beispielsweise ein Kühlschrank oder ein Herd - an das Niederspannungs-Stromnetz NSL-IH des ersten Heimbereiches IH-B1 angeschlossen. Ein Anschluß der Kommunikationsanlage PBX, der internen Kommunikationsendgeräte KE-I1, KE-I2 und der intelligenten, steuerbaren Haushaltsgeräte HG erfolgt dabei über herkömmliche Steck-Anschlußvorrichtungen - im allgemeinen als Steckdose bezeichnet - des Niederspannungs-Stromnetzes NSL.

Den internen an das Niederspannungs-Stromnetz NSL-IH des ersten Heimbereiches IH-B1 angeschlossenen Kommunikationsendgeräten KE-I1, KE-I2 und den intelligenten Haushaltsgeräten HG ist für eine Adressierung eine, im Niederspannungs-Stromnetz NSL eindeutige, im jeweiligen Kommunikationsendgerät KE-I1, KE-I2 bzw. Haushaltsgerät HG gespeicherte Identifizierung ID zugeordnet. Diese eindeutige Identifizierung ID kann beispielsweise durch eine 4 Byte lange sogenannte IP-Adresse (Internet Protokoll) gebildet werden.

In einer zentralen Steuerung CC der Kommunikationsanlage PBX sind in einer Datenbasis DB die Identifizierungen ID, der an das Niederspannungs-Stromnetz NSL-IH des ersten Heimbereiches IH-B1 angeschlossenen Kommunikationsendgeräte KE-I1, KE-I2 mit der jeweiligen Rufnummer R-NR KE-I1, R-NR KE-I2 dieser Kommunikationsendgeräte KE-I1, KE-I2 im Kommunikationsnetz KN einander zugehörig gespeichert. Im Rahmen eines, mit einer Rufnummer R-NR eines internen Kommunikationsendgerätes eingeleiteten Verbindungsaufbaus ausgehend von einem externen Kommunikationsendgerät zu einem an das Niederspannungs-Stromnetz NSL-IH des ersten Heimbereiches IH-B1 angeschlossenen Kommunikationsendgerät KE-I1, KE-I2 erfolgt anhand der Datenbasis DB eine Umsetzung der übermittelten Rufnummer R-NR auf die zugehörige Identifizierung ID des internen Kommunikationsendgerätes KE-I1, KE-I2.

Durch die Verwendung einer im Niederspannungs-Stromnetz NSL eindeutigen Identifizierung ID zur Adressierung der am Niederspannungs-Stromnetz NSL-IH des ersten Heimbereiches IH-B1 angeschlossenen, internen Kommunikationsendgeräte KE-I1, KE-I2, können die internen Kommunikationsendgeräte KE-I1, KE-I2 an einer beliebigen Steck-Anschlußvorrichtung des Niederspannungs-Stromnetz NSL-IH des ersten Heimbereiches IH-B1 angeschlossen werden, da eine Adressierung der internen Kommunikationsendgeräte KE-I1, KE-I2 nicht wie üblich, durch die einem bestimmten Teilnehmer-Anschlußport der Kommunikationsanlage PBX zugeordnete Rufnummer erfolgt.

Des weiteren können die, am Niederspannungs-Stromnetz NSL-IH des ersten Heimbereiches IH-B1 angeschlossenen intelligenten Haushaltsgeräte HG von einem internen oder von einem externen Kommunikationsendgerät KE-I, KE-E aus über die Kommunikationsanlage PBX durch Übermittlung geeigneter Steuersignale mit der Identifizierung ID des jeweiligen intelligenten Haushaltsgerätes HG gesteuert werden.

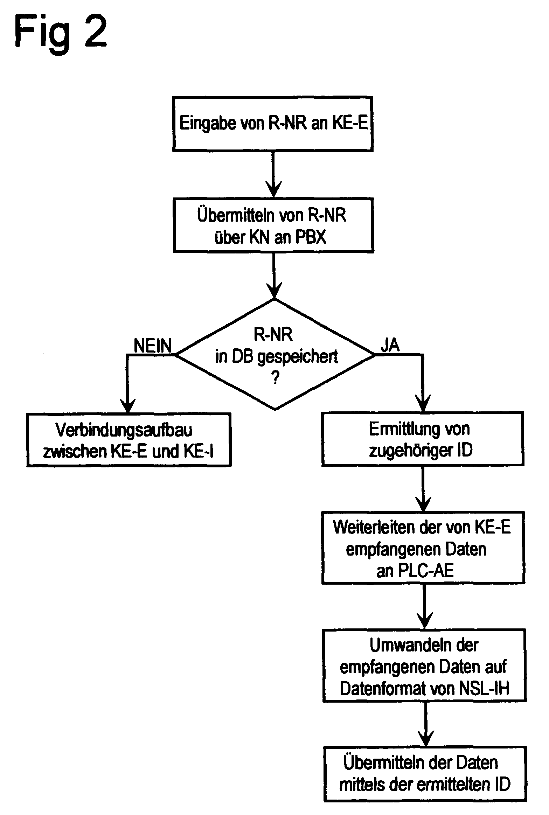

Fig. 2 zeigt ein Ablaufdiagramm zur Veranschaulichung der bei einem Verbindungsaufbau ausgehend vom externen Kommunikationsendgerät KE-E zu einem internen Kommunikationsendgerät KE-I, KE-I1, KE-I2 ablaufenden wesentlichen Verfahrensschritten. Infolge einer Eingabe der Rufnummer R-NR eines internen Kommunikationsendgerätes KE-I, KE-I1, KE-I2 am externen Kommunikationsendgerät KE-E wird die eingegebene Rufnummer R-NR im Rahmen eines Verbindungsaufbaus über das Kommunikationsnetz KN an die Netz-Anschlußeinheit N-AE der Kommunikationsanlage PBX übermittelt.

Die Netz-Anschlußeinheit N-AE leitet die empfangene Rufnummer R-NR an die zentrale Steuerung CC der Kommunikationsanlage PBX weiter, durch die überprüft wird, ob die empfangene Rufnummer R-NR in der Datenbasis DB gespeichert ist. Ist dies nicht der Fall, d.h. das durch die empfange Rufnummer R-NR adressierte Kommunikationsendgerät ist kein an das Niederspannungs-Stromnetz NSL-IH des ersten Heimbereiches IH-B1 angeschlossenes internes Kommunikationsendgerät KE-I1, KE-I2 wird ein Verbindungsaufbau zwischen dem externen Kommunikationsendgerät KE-E und dem, durch die empfangene Rufnummer R-NR adressierten Kommunikationsendgerät - beispielsweise dem internen Kommunikationsendgerät KE-I - in herkömmlicher Weise über ein - nicht dargestelltes - Koppelfeld der Kommunikationsanlage PBX eingeleitet.

Ist dagegen die empfange Rufnummer R-NR in der Datenbasis DB gespeichert, d.h. das durch die empfange Rufnummer R-NR adressierte Kommunikationsendgerät ist ein an das Niederspannungs-Stromnetz NSL-IH des ersten Heimbereiches IH-B1 angeschlossenes internes Kommunikationsendgerät KE-I1, KE-I2, wird anhand der empfangenen Rufnummer R-NR die, der empfangenen Rufnummer R-NR zugehörige Identifikation ID ermittelt. Im folgenden werden alle über einen, für eine Verbindung mit dem externen Kommunikationsendgerät KE-E reservierten Nutzdatenkanal und Signalisierungskanal - beispielsweise des ISDN-Basisanschlusses - der Netz-Anschlußeinheit N-AE an der Kommunikationsanlage PBX empfangenen Daten von der Netz-Anschlußeinheit N-AE direkt an die PLC-Anschlußeinheit PLC-AE weitergeleitet.

Durch die PLC-Anschlußeinheit PLC-AE werden die empfangenen, im allgemeinen auf einem zeitschlitz-orientierten Datenformat basierenden Daten in ein, für eine Datenübermittlung über das Niederspannungs-Stromnetz NSL vorgesehenes Datenformat umgesetzt. Eine Datenübermittlung über das Niederspannungs-Stromnetz NSL kann dabei mittels proprietärer Protokolle oder alternativ mittels des standardisierten sogenannten IP-Protokolls (Internet Protokoll) erfolgen.

Abschließend werden die umgewandelten Daten mit der zugehörigen Identifikation ID des adressierten internen Kommunikationsendgerätes KE-I1, KE-I2 in das Niederspannungs-Stromnetz NSL-IH des ersten Heimbereiches IH-B1 eingespeist, von dem sie vom adressierten internen Kommunikationsendgerät KE-I1, KE-I2 gelesen werden können.

Eine Datenübermittlung ausgehend von einem internen, an das Niederspannungs-Stromnetz NSL-IH des ersten Heimbereiches IH-B1 angeschlossenen Kommunikationsendgerät KE-I1, KE-I2 zu einem nicht an das Niederspannungs-Stromnetz NSL angeschlossenes Kommunikationsendgerät KE-E, KE-I erfolgt in analoger Weise, wobei durch die zentrale Steuerung CC der Kommunikationsanlage PBX eine Umsetzung der Identifizierung ID des internen Kommunikationsendgerätes KE-I1, KE-I2 auf die zugehörige Rufnummer R-NR im Kommunikationsnetz KN erfolgt.

In Fällen, in denen ein Anschluß von internen Kommunikationsendgeräten an die Kommunikationsanlage PBX ausschließlich über das Niederspannungs-Stromnetz NSL erfolgt, kann der Funktionsumfang der Kommunikationsanlage PBX wesentlich reduziert werden, da die Teilnehmer-Anschlußeinheiten T-AE und ein Koppelfeld nicht mehr notwendig sind. Die Kommunikationsanlage PBX würde in diesem Fall lediglich eine Datenübermittlung zwischen dem an der Kommunikationsanlage PBX angeschlossenen Kommunikationsnetz KN und dem Niederspannungs-Stromnetz NSL steuern. Da auch eine, im allgemeinen übliche Stromversorgung der internen Kommunikationsendgeräte KE-I durch die Kommunikationsanlage PBX entfallen kann, reduziert sich der Energiebedarf der Kommunikationsanlage PBX in diesem Fall erheblich.

## Patentansprüche

1. Anordnung für eine Datenübermittlung,
mit einer, in einem Heimbereich (IH-B) angeordneten Kommunikationsanlage (PBX) zum Anschluß von Kommunikationsendgeräten (KE-I, KE-E),
**dadurch gekennzeichnet,**
daß die Kommunikationsanlage (PBX) und mindestens ein internes Kommunikationsendgerät (KE-I1, KE-I2) für eine Datenübermittlung mit einem, im Heimbereich (IH-B) angeordneten Niederspannungs-Stromnetz (NSL-IN) verbunden sind, und
daß die Kommunikationsanlage (PBX) und das Kommunikationsendgerät (KE-I1, KE-I2) jeweils eine Anschlußeinheit (PLC-AE) zum Einschreiben von, über das Niederspannungs-Stromnetz (NSL-IN) zu übermittelnden Daten in das Niederspannungs-Stromnetz (NSL-IN) und zum Auslesen von, über das Niederspannungs-Stromnetz (NSL-IN) übermittelten Daten aus dem Niederspannungs-Stromnetz (NSL-IN) aufweisen.

2. Anordnung nach Anspruch 1,
**dadurch gekennzeichnet,**
daß die Kommunikationsanlage (PBX) und das interne Kommunikationsendgerät (KE-I1, KE-I2) über eine herkömmliche Steck-Anschlußvorrichtung des Niederspannungs-Stromnetzes (NSL-IN) an dieses angeschlossen sind.

3. Anordnung nach einem der vorhergehenden Ansprüche,
**dadurch gekennzeichnet,**
daß dem internen Kommunikationsendgerät (KE-I1, KE-I2) im Niederspannungs-Stromnetz (NSL-IN) eine eindeutige Identifizierung (ID1, ID2) zugeordnet ist.

4. Anordnung nach Anspruch 3,
**dadurch gekennzeichnet,**
daß die Identifizierung (ID1, ID2) durch eine IP-Adresse (Internet Protokoll) gebildet ist.

5. Anordnung nach Anspruch 3 oder 4,
**dadurch gekennzeichnet,**
daß die Kommunikationsanlage (PBX) eine Datenbasis (DB) für ein bidirektionales Umsetzen einer, dem internen Kommunikationsendgerät (KE-I1, KE-I2) zugeordneten Rufnummer (R-NR KE-I1, R-NR KE-I2) und der eindeutigen Identifizierung (ID1, ID2) aufweist.

6. Anordnung nach einem der vorhergehenden Ansprüche,
**dadurch gekennzeichnet,**
daß an das Niederspannungs-Stromnetzes (NSL-IN) Haushaltsgerät (HG) anschließbar sind, die über die Kommunikationsanlage (PBX) steuerbar ist.
